# EUROPEAN PATENT APPLICATION

(11) **EP 4 822 359 A1**
(43) Date of publication of application: **14.10.2026**
(21) Application number: 26171540.3
(22) Date of filing: 09.04.2026
(51) Int. Cl.: G01P 3/49, G01P 13/04, G01P 21/02

(54) **SPEED MEASURING AND DIRECTION FINDING DEVICE, COMPRESSOR, AND REFRIGERATION DEVICE**

(30) Priority: 10.04.2025 CN 202510449413
(71) Applicant: Carrier Corporation, Palm Beach Gardens, FL 33418 (US)
(72) Inventor: HAO, Yu, Shanghai, 201206 (CN)
(74) Representative: Dehns

(57) **Abstract**

This application provides a speed measuring and direction finding device (100) that measures a rotation speed and finds a rotation direction of a rotation shaft (101), the speed measuring and direction finding device (100) including: a rotation shaft (101); a notch measurement portion (102) formed by cutting a part on a surface of the rotation shaft (101); an eddy current displacement sensor (103) disposed corresponding to the notch measurement portion (102); and an eddy current signal processing module (200) connected to the eddy current displacement sensor (103), and configured to receive and process an eddy current signal from the eddy current displacement sensor (103) when the rotation shaft (101) rotates, in which the notch measurement portion (102) at least has a first inclined surface (104) and a second inclined surface (105) that are formed by cutting the surface of the rotation shaft (101) and are provided along a rotation direction of the rotation shaft (101), and the first inclined surface (104) and the second inclined surface (105) have different inclination angles with respect to the surface of the rotation shaft (101). The speed measuring and direction finding device (100) has a simple and compact structure and is convenient to use, and only one asymmetrical notch measurement portion (102) opened in the surface of the rotation shaft (101) and one corresponding eddy current displacement sensor (103) are provided, so that requirements on an installation space is low, and the speed measuring and direction finding device (100) can be better applied to different use occasions of the rotation shaft (101).

## Description

### PRIORITY CLAIM

This application claims benefit of Chinese Patent Application No. 202510449413.6, filed April 10, 2025, and all the benefits accruing therefrom under 35 U.S.C. §119, the contents of which in their entirety are herein incorporated by reference.

### BACKGROUND

This application relates to a technical field of speed measuring and direction finding devices, refrigeration/cooling equipment, and in particular to a speed measuring and direction finding device that measures a rotation speed and finds a rotation direction of a rotation shaft, a compressor including the speed measuring and direction finding device, and a refrigeration system including the compressor.

In the field of compressor control, monitoring a rotation speed and a rotation direction of a rotor in real time is an important technical approach to ensure a safe operation of a system. At present, a common technical solution is to provide at least two measurement portions on a surface of the rotor, and correspondingly provide at least two sensors for detection. When the measurement portions pass the sensors, a corresponding signal is generated, and the rotation speed of the rotor can be calculated and the rotation direction of the rotor can be determined by analyzing changes of output signals of the two sensors.

However, in the related art, a plurality of measurement portions need to be machined on a rotor, which increases the complexity of a machining process of the rotor, and secondly, a plurality of sensors need to be correspondingly provided with the plurality of measurement portions, which has high requirements on an installation space of the sensors, and thus, detection schemes in the related art have significant shortcomings in terms of economic efficiency and system integration.

### SUMMARY

An object of at least preferred embodiments of this application is to provide a speed measuring and direction finding device that measures a rotation speed and finds a rotation direction of a rotation shaft, a compressor including the speed measuring and direction finding device, and a refrigeration system including the compressor to at least solve or alleviate some of the problems in the related art.

This application provides a speed measuring and direction finding device that measures a rotation speed and finds a rotation direction of a rotation shaft, a speed measuring and direction finding device including: the rotation shaft; a notch measurement portion formed by cutting a part on a surface of the rotation shaft; an eddy current displacement sensor disposed corresponding to the notch measurement portion, and configured to detect a distance from a surface of the notch measurement portion; and an eddy current signal processing module connected to the eddy current displacement sensor, and configured to receive and process an eddy current signal from the eddy current displacement sensor when the rotation shaft rotates, in which the notch measurement portion at least has a first inclined surface and the second inclined surface that are formed by cutting a surface of the rotation shaft and are provided along the rotation direction of the rotation shaft, and the first inclined surface and the second inclined surface have different inclination angles with respect to the surface of the rotation shaft.

In one or more embodiments, the inclination angle between one of the first inclined surface or the second inclined surface and the surface of the rotation shaft is 70 degrees to 90 degrees.

In one or more embodiments, the inclination angle between the other one of the first inclined surface or the second inclined surface and the surface of the rotation shaft is 30 degrees to 60 degrees.

In one or more embodiments, the eddy current signal processing module includes a high-pass filtering module configured to receive the eddy current signal from the eddy current displacement sensor and output a filtered high frequency signal.

In one or more embodiments, the speed measuring and direction finding device that measures a rotation speed and finds a rotation direction of a rotation shaft further includes: a signal slope calculation module configured to set a predetermined proportional value of a signal peak value from the eddy current signal processing module as a slope evaluation peak value, and calculate and output a signal slope according to the slope evaluation peak value; and a rotation direction determination module configured to compare the signal slope output by the signal slope calculation module with a preset slope value of the first inclined surface or the second inclined surface to determine the rotation direction of the rotation shaft.

In one or more embodiments, the predetermined proportional value is 70% to 90% of the signal peak value of the eddy current signal processing module.

In one or more embodiments, the speed measuring and direction finding device that measures a rotation speed and finds a rotation direction of a rotation shaft further includes a rotation speed determination module configured to determine a rotation speed of the rotation shaft according to a signal peak value from the eddy current signal processing module.

One or more embodiments of this application further provides a compressor including: a housing, a motor; an impeller; and the speed measuring and direction finding device that measures a rotation speed and finds a rotation direction of a rotation shaft according to one or more embodiments.

In one or more embodiments, the compressor further includes a compressor frequency modulation module configured to issue a frequency modulation instruction for increasing or decreasing a rotation speed of the compressor, in which the speed measuring and direction finding device operates only when the compressor frequency modulation module issues the frequency modulation instruction for increasing the rotation speed of the compressor.

One or more embodiments of this application further provides a refrigeration device including: a compressor, a condenser, and an evaporator connected in sequence by a refrigerant pipeline, in which the compressor is the compressor according to one or more embodiments.

### BRIEF DESCRIPTION OF THE SEVERAL VIEWS OF THE DRAWINGS

Certain exemplary embodiments will now be described by way of example only and with reference to the accompanying drawings in which:
Fig. 1 is a schematic structural diagram of a speed measuring and direction finding device.
Fig. 2 is a schematic structural diagram of a speed measuring and direction finding device.
Fig. 3 is a schematic diagram of a signal generated by an eddy current displacement sensor and an eddy current signal processing module when a rotation shaft rotates clockwise.
Fig. 4 is a schematic diagram of a signal generated by the eddy current displacement sensor and the eddy current signal processing module when the rotation shaft rotates counterclockwise.
Fig. 5 is a schematic diagram of a signal processing module.
Fig. 6 is a schematic diagram of modules of a compressor.
Fig. 7 is a schematic diagram of modules of a refrigeration device.

Reference numerals: speed measuring and direction finding device 100, rotation shaft 101, notch measurement portion 102, eddy current displacement sensor 103, first inclined surface 104, second inclined surface 105, first inclined surface segment 1041, second inclined surface segment 1051, eddy current signal processing module 200, high-pass filtering module 201, signal slope calculation module 202, rotation direction determination module 203, rotation speed determination module 204, compressor 300, compressor frequency modulation module 301, refrigeration device 400, condenser 401, evaporator 402, refrigerant pipeline 403.

### DETAILED DESCRIPTION OF THE DISCLOSURE

It should be noted that working principles, features, advantages, and the like of refrigeration equipment according to this application will be described below by way of embodiments. However, it should be understood that all descriptions are only given for exemplification and therefore these embodiments should not be understood as forming any limitation on this application.

In addition, for any single technical feature described or implicit in one or more embodiments mentioned herein, or any single technical feature shown or implicit in the drawings, this application still allows any combination or deletion between these technical features (or their equivalents) without any technical obstacles, thereby obtaining more other embodiments of this application that may not be directly mentioned herein.

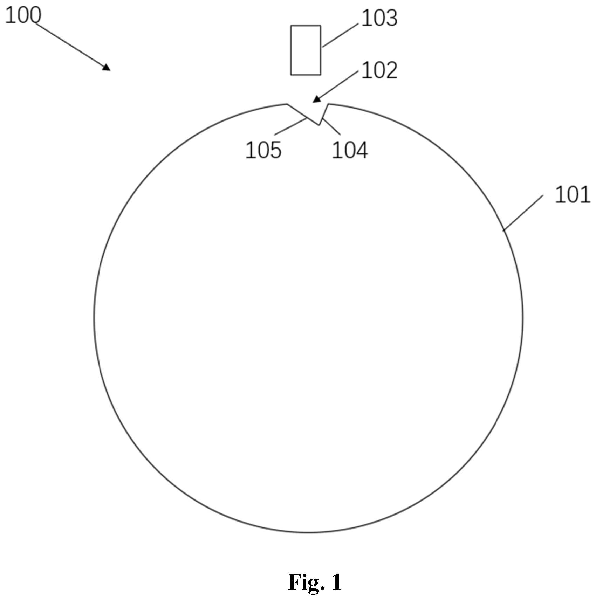

Fig. 1 is a structural schematic diagram of a speed measuring and direction finding device according to one or more embodiments of this application. As shown in Fig. 1, a speed measuring and direction finding device 100 according to one or more embodiments of this application includes a rotation shaft 101, a notch measurement portion 102 formed by cutting a part on a surface of the rotation shaft 101, and an eddy current displacement sensor 103. The notch measurement portion 102 at least includes a first inclined surface 104 and a second inclined surface 105 cutting into the surface of the rotation shaft 101 and provided along a rotation direction of the rotation shaft 101, and the first inclined surface 104 and the second inclined surface 105 have different inclination angles with respect to the surface of the rotation shaft 101.

The eddy current displacement sensor 103 is disposed corresponding to a position of the notch measurement portion 102 in a shaft direction of the rotation shaft 101, and detects a distance between the eddy current displacement sensor 103 and the surface of the rotation shaft 101 in real time, and the rotation shaft 101 is preferably cylindrical as a whole. When the rotation shaft 101 rotates around a central axis of the cylinder, if a part on the surface of the rotation shaft 101 not provided with the notch measurement portion 102 rotates to a position corresponding to the eddy current displacement sensor 103, the distance to the surface of the rotation shaft 101 which is detected by the eddy current displacement sensor 103 is constant, and if the notch measurement portion 102 rotates to the position corresponding to the eddy current displacement sensor 103, since the first inclined surface 104 and the second inclined surface 105 cut into the surface of the rotation shaft 101 at different inclination angles, the distance detected by the eddy current displacement sensor 103 changes along with changes of the first inclined surface 104 and the second inclined surface 105, cutting into the surface of the rotation shaft 101, of the notch measurement portion 102. In other words, when the eddy current displacement sensor 103 corresponds to the first inclined surface 104, a change in a distance between the eddy current displacement sensor 103 and the first inclined surface 104 is detected, and when the eddy current displacement sensor 103 corresponds to the second inclined surface 105, a change in a distance between the eddy current displacement sensor 103 and the second inclined surface 105 is detected. The inclination angles of the first inclined surface 104 and the second inclined surface 105 cutting into the surface of the rotation shaft 101 are different, so that an order in which the first inclined surface 104 and the second inclined surface 105 on the surface of the rotation shaft 101 pass the position corresponding to the eddy current displacement sensor 103 can be determined according to changes in the detected distance when the rotation shaft 101 rotates, thereby determining the rotation direction of the rotation shaft 101.

Meanwhile, if any point on the first inclined surface 104 or the second inclined surface 105 is selected as a reference, a rotation speed of the rotation shaft 101 can be determined.

Therefore, a current rotation direction and a current rotation speed of the rotation shaft 101 can be quickly and effectively determined by only one notch measurement portion 102 having the first inclined surface 104 and the second inclined surface 105 with different inclination angles and one eddy current displacement sensor 103. Economic benefits and system integration of the rotation shaft are improved in terms of rotation direction finding and rotation speed measuring.

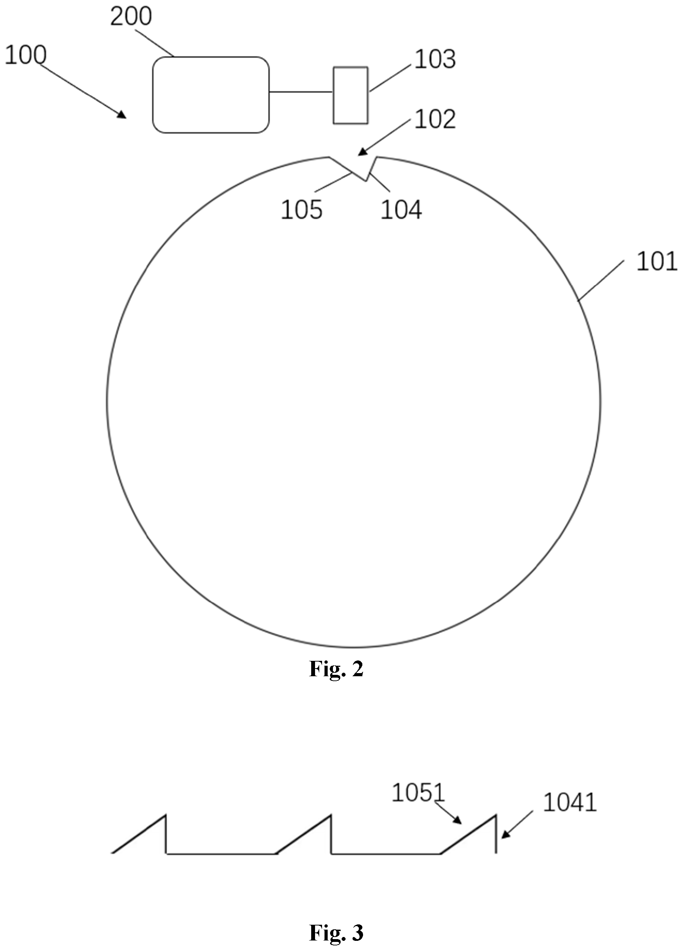

Fig. 2 is a schematic structural diagram of a speed measuring and direction finding device according to some embodiments of this application. As shown in Fig. 1 and Fig. 2, the speed measuring and direction finding device 100 according to one or more embodiments of this application is further provided with an eddy current signal processing module 200, and the eddy current signal processing module 200 is connected to the eddy current displacement sensor 103. When the rotation shaft 101 rotates, the eddy current displacement sensor 103 detects the distance between the eddy current displacement sensor 103 and the rotation shaft 101 in real time when the rotation shaft 101 rotates to the position corresponding to the eddy current displacement sensor 103, and the eddy current signal processing module 200 receives and processes an eddy current signal detected by the eddy current displacement sensor 103 to determine the current rotation direction and the current rotation speed of the rotation shaft 101.

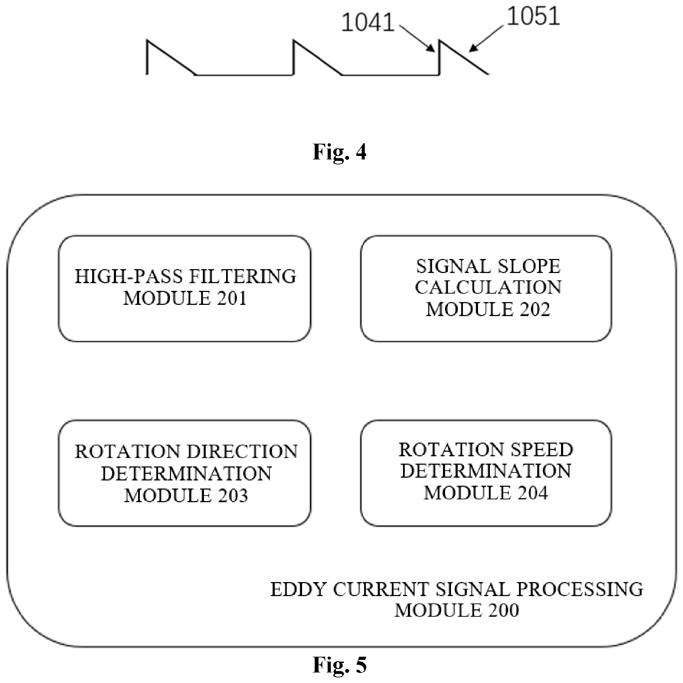

Specifically, Fig. 3 is a schematic diagram of a signal generated by the eddy current signal processing module 200 when the rotation shaft rotates clockwise according to one or more embodiments of this application, and Fig. 4 is a schematic diagram of a signal generated by the eddy current signal processing module 200 when the rotation shaft rotates counterclockwise according to one or more embodiments of this application. As shown in Figs. 3 and 4, under a working condition that the rotation shaft 101 rotates in a clockwise direction, when the notch measurement portion 102 does not rotate to the position corresponding to the eddy current displacement sensor 103, a distance signal waveform detected by the eddy current displacement sensor 103 and then generated by the eddy current signal processing module 200 is substantially a horizontal straight line, that is, the distance between the surface of the rotation shaft 101 and the eddy current displacement sensor 103 is substantially constant when the rotation shaft 101 rotates. When the notch measurement portion 102 rotates to the position corresponding to the eddy current displacement sensor 103, the first inclined surface 104 first passes the eddy current displacement sensor 103, and in this case, the distance signal waveform detected by the eddy current displacement sensor 103 and then generated by the eddy current signal processing module 200 shows a first inclined surface segment 1041 corresponding to the inclination angle of the first inclined surface 104. When the second inclined surface 105 passes the eddy current displacement sensor 103, the distance signal waveform detected by the eddy current displacement sensor 103 and then generated by the eddy current signal processing module 200 shows a second inclined surface segment 1051 corresponding to the inclination angle of the second inclined surface 105.

Under a working condition that the rotation shaft 101 rotates in a counterclockwise direction, when the notch measurement portion 102 rotates to the position corresponding to the eddy current displacement sensor 103, the second inclined surface 105 first passes the eddy current displacement sensor 103, the distance signal waveform shows the second inclined surface segment 1051 corresponding to the inclination angle of the second inclined surface 105, and the first inclined surface 104 then passes the eddy current displacement sensor 103, and the distance signal waveform shows the first inclined surface segment 1041 corresponding to the inclination angle of the first inclined surface 104.

That is, when the notch measurement portion 102 does not rotate to the eddy current displacement sensor 103, the distance signal waveform is a horizontal straight line segment, and when the notch measurement portion 102 rotates clockwise to the eddy current displacement sensor 103, the distance signal wave shows a feature of the distance signal waveform in which the first inclined surface segment 1041 is in the front and followed by the second inclined surface segment 1051, which corresponds to a cross-sectional profile of the notch measurement portion 102, and when the notch measurement portion 102 rotates counterclockwise to the eddy current displacement sensor 103, the distance signal wave shows a feature of the distance signal waveform in which the second inclined surface segment 1051 is in the front and followed by the first inclined surface segment 1041, which corresponds to a cross-sectional profile of the notch measurement portion 102.

Therefore, whether the rotation shaft 101 rotates clockwise or counterclockwise can be determined according to the above features of the distance signal waveform, so that the rotation direction of the rotation shaft 101 is determined.

Meanwhile, the surface of the rotation shaft 101 is cut to form only one notch measurement portion 102, and when the rotation shaft 101 rotates, the current rotation speed of the rotation shaft 101 can be calculated according to appearance frequencies of a signal segment waveform corresponding to the notch measurement portion 102, that is, the first inclined surface segment 1041 and/or the second inclined surface segment 1051 in the distance signal waveform detected by the eddy current displacement sensor 103 and then generated by the eddy current signal processing module 200. Specifically, the number of times the signal segment corresponding to the notch measurement portion 102 appears in a distance signal generated by the eddy current signal processing module 200 within a predetermined time is calculated, each appearance represents once rotation of the rotation shaft 101, and the current rotation speed of the rotation shaft 101 can be calculated by calculating a ratio of the number of times the signal segment corresponding to the notch measurement portion 102 appears to the predetermined time.

According to the one or more embodiments, according to the feature as shown in Fig. 3 of the distance signal waveform detected by the eddy current displacement sensor 103 and then processed by the eddy current signal processing module 200, the current rotation direction and the current rotation speed of the rotation shaft 101 can be quickly and effectively determined by only one notch measurement portion 102 having the first inclined surface 104 and the second inclined surface 105 with different inclination angles and one eddy current displacement sensor 103.

As described above, the speed measuring and direction finding device 100 that measures a rotation speed and finds a rotation direction of the rotation shaft 101 according to one or more embodiments of this application has a simple and compact structure and is convenient to use, and only one notch measurement portion 102 opened in the surface of the rotation shaft 101 and one corresponding eddy current displacement sensor 103 are provided, so that requirements on an installation space is low, and the speed measuring and direction finding device 100 can be better applied to different use occasions of the rotation shaft 101.

In addition, in an exemplary embodiment of this application, the inclination angle between one of the first inclined surface 104 or the second inclined surface 105 and the surface of the rotation shaft 101 (that is, an angle formed with a tangent line of the surface of the rotation shaft 101) is 70 degrees to 90 degrees. The inclination angle between the other one of the first inclined surface 104 or the second inclined surface 105 and the surface of the rotation shaft 101 is 30 degrees to 60 degrees.

According to the one or more embodiments, a large difference in the inclination angles is present between the first inclined surface 104 and the second inclined surface 105, and for example, the inclination angle between the first inclined surface 104 and the surface of the rotation shaft 101 is set to 90 degrees, and the inclination angle between the second inclined surface 105 and the surface of the rotation shaft 101 is set to 30 degrees or 45 degrees. The distance signal waveform generated by the eddy current displacement sensor 103 and the eddy current signal processing module 200 when the rotation shaft 101 rotates clockwise is significantly different from the distance signal waveform generated by the eddy current displacement sensor 103 and the eddy current signal processing module 200 when the rotation shaft 101 rotates counterclockwise, so that the current rotation direction of the rotation shaft 101 can be obtained more quickly and accurately. That is, the higher the degree of asymmetry of the cross-sectional profile of the notch measurement portion 102, the more accurate the detection result of the current rotation direction of the rotation shaft 101 which is detected by the eddy current displacement sensor 103 and obtained by the eddy current signal processing module 200.

In particular, when the inclination angle of one of the first inclined surface 104 or the second inclined surface 105 is 90 degrees, that is, perpendicular to the tangent line of the surface of the rotation shaft 101, the cutting process of the first inclined surface 104 or the second inclined surface 105 becomes simpler, and at the same time, the distance signal waveform corresponding to the first inclined surface 104 or the second inclined surface 105 is more prominent, which is convenient to make the determination on the rotation direction and the rotation speed of the rotation shaft 101.

In an exemplary embodiment, the eddy current signal processing module 200 further includes a high-pass filtering module 201 that receives the eddy current signal from the eddy current displacement sensor 103 and outputs a filtered high frequency signal.

Specifically, when the eddy current signal detected by the eddy current displacement sensor 103 is transmitted to the eddy current signal processing module 200, a low frequency signal is removed or attenuated by the high-pass filtering module 201, and only a high frequency signal that can reflect the rotation speed of the rotation shaft 101 and a distance between the eddy current displacement sensor 103 and the surface of the rotation shaft 101 is retained. That is, an output signal of the eddy current displacement sensor 103 may include low frequency components that may cause slowly varying such as fixed DC offset, temperature drift, power supply fluctuations, or circuit mismatches in the output signal, and the high-pass filtering module 201 removes these low frequency components, and only retains a high frequency pulse signal related to a target distance change and a rotation speed change, so that measurement accuracy of the rotation speed and the rotation direction of the rotation shaft 101 is improved, and a problem that the distance signal generated by the eddy current signal processing module 200 fluctuates due to an influence of a low frequency DC voltage signal, thereby affecting the measurement of the rotation speed and the rotation direction of the rotation shaft 101 can be avoided.

Fig. 5 is a schematic diagram of a signal processing module according to one or more embodiments of this application. Referring to Fig. 5, in an exemplary embodiment of this application, the speed measuring and direction finding device 100 that measures a rotation speed and finds a rotation direction of the rotation shaft 101 further includes a signal slope calculation module 202, a rotation direction determination module 203, and a rotation speed determination module 204.

Specifically, when the rotation speed and the rotation direction of the rotation shaft 101 are measured and found by the speed measuring and direction finding device 100 according to one or more embodiments of this application, the signal slope calculation module 202 sets a predetermined proportional value of a signal peak value from the eddy current signal processing module 200 as a slope evaluation peak value, and respectively calculates a slope of the eddy current signal rising from a horizontal segment to the predetermined proportional value and a slope of the eddy current signal falling from the predetermined proportional value to the horizontal segment. In this case, the rotation direction determination module 203 compares the calculated slopes of the signal segment with a preset slope value of the first inclined surface 104 or the second inclined surface 105, that is, the inclination angle of the first inclined surface 104 or the second inclined surface 105 with respect to the surface of the rotation shaft 101, and if the slope rising from the horizontal segment to the predetermined proportional value matches the preset slope value of the first inclined surface 104 and the slope falling from the predetermined proportional value to the horizontal segment matches the preset slope value of the second inclined surface 105, it is determined that the rotation shaft 101 rotates clockwise currently.

On the contrary, if the slope rising from the horizontal segment to the predetermined proportional value matches the preset slope value of the second inclined surface 105 and the slope falling from the predetermined proportional value to the horizontal segment matches the preset slope value of the first inclined surface 104, it is determined that the rotation shaft 101 rotates counterclockwise currently.

Further preferably, the predetermined proportional value is 70% to 90% of the signal peak value output by the eddy current signal processing module 200, and more preferably, the predetermined proportional value may be 80% of the signal peak value output by the eddy current signal processing module 200.

By setting the predetermined proportional value to a value in a range of 70% to 90% of the signal peak value, for example, preferably one of 75% or 80% or 85%, a problem that a signal peak value point is affected by high frequency noise, sampling jitter, or signal distortion, and as a result, noise fluctuation affects the calculation result when an actual peak point is used as a calculation reference can be effectively avoided.

Meanwhile, the rotation speed determination module 204 preferably determines the rotation speed of the rotation shaft 101 according to the signal peak value from the eddy current signal processing module 200. Specifically, the number of times the signal waveform peak values appear in the distance signal generated by the eddy current signal processing module 200 within the predetermined time is calculated, each appearance represents once rotation of the rotation shaft 101, and the current rotation speed of the rotation shaft 101 can be calculated by calculating a ratio of the number of times the signal waveform peak values appear to the predetermined time.

According to the one or more embodiments, the current rotation direction and the current rotation speed of the rotation shaft 101 can be quickly and effectively determined by only one notch measurement portion 102 with an asymmetric cross-sectional profile and one eddy current displacement sensor 103 disposed corresponding to the notch measurement portion 102. The speed measuring and direction finding device 100 that measures a rotation speed and finds a rotation direction of the rotation shaft 101 according to one or more embodiments of this application has a simple and compact structure and is convenient to use, and only one notch measurement portion 102 opened in the surface of the rotation shaft 101 and one corresponding eddy current displacement sensor 103 are provided, and thus requirements on an installation space is low, the number of components is reduced, processing and installation costs are reduced, and the speed measuring and direction finding device 100 can be better applied to different use occasions of the rotation shaft 101.

In one or more embodiments of this application, elements denoted by the same names and symbols as those in the one or more embodiments represent identical components, and descriptions thereof are omitted here.

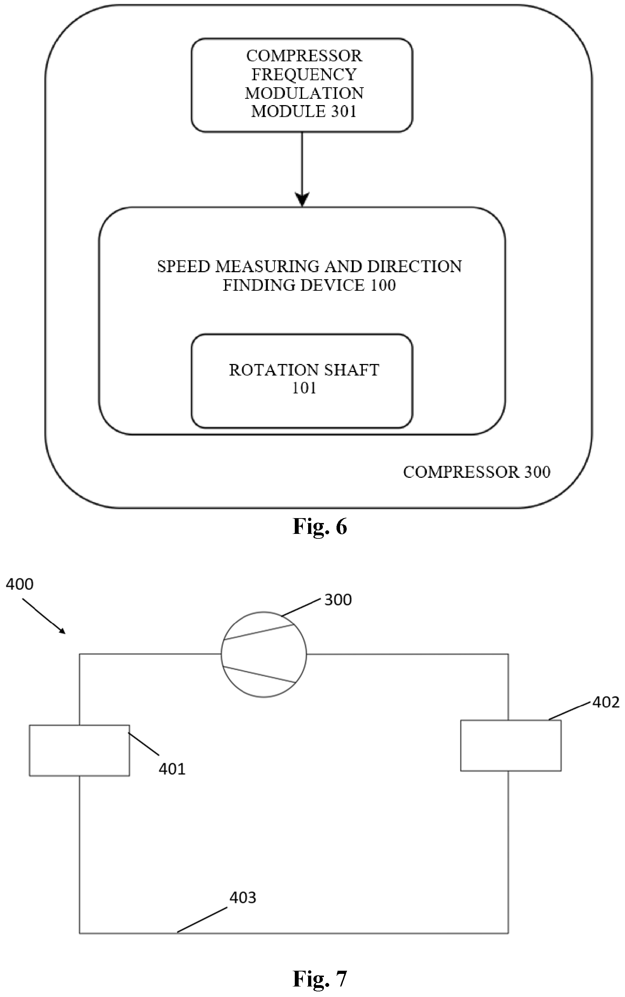

Fig. 6 is a schematic diagram of modules of a compressor according to one or more embodiments of this application. In another aspect of this application further provides a compressor 300 including the speed measuring and direction finding device 100 that measures a rotation speed and finds a rotation direction of the rotation shaft 101 according to one or more embodiments. The compressor 300 further includes a compressor frequency modulation module 301, the compressor frequency modulation module 301 issues a frequency modulation instruction for increasing or decreasing a rotation speed of the compressor 300, and the speed measuring and direction finding device 100 only operates when the compressor frequency modulation module 301 issues the frequency modulation instruction for increasing the rotation speed of the compressor 300.

According to the one or more embodiments, when the compressor frequency modulation module 301 modulates a frequency of the compressor 300, the speed measuring and direction finding device 100 detects the rotation speed and the rotation direction of the rotation shaft 101 in the compressor 300 in real time, so that the rotation speed of the rotation shaft 101 of the compressor 300 can be determined more quickly and easily, and the determination result can be fed back to the compressor frequency modulation module 301, thereby facilitating controlling the rotation speed of the compressor 300 to be adjusted at a predetermined rate until a target rotation speed (that is, a target frequency) is reached.

Fig. 7 is a schematic diagram of modules of a refrigeration device according to one or more embodiments of this application. Another aspect of this application further provides a refrigeration device 400 including the compressor 300, a condenser 401, and an evaporator 402 connected in sequence by a refrigerant pipeline 403, in which the compressor is the compressor 300 according to one or more embodiments of this application.

The one or more embodiments are merely exemplary embodiments of this application and are not intended to limit this application. Any modifications, equivalent substitutions, and improvements made within the scope of the appended claims shall be included in the protection scope of this application.

## Claims

1. A speed measuring and direction finding device (100) that measures a rotation speed and finds a rotation direction of a rotation shaft (101), the speed measuring and direction finding device comprising:
a rotation shaft (101);
a notch measurement portion (102) formed by cutting a part on a surface of the rotation shaft;
an eddy current displacement sensor (103) disposed corresponding to the notch measurement portion (102), and configured to detect a distance from a surface of the notch measurement portion (102); and
an eddy current signal processing module (200) connected to the eddy current displacement sensor (103), and configured to receive and process an eddy current signal from the eddy current displacement sensor (103) when the rotation shaft (101) rotates, wherein
the notch measurement portion (102) at least has a first inclined surface (104) and a second inclined surface (105) that are formed by cutting the surface of the rotation shaft (101) and are provided along a rotation direction of the rotation shaft (101), and the first inclined surface (104) and the second inclined surface (105) have different inclination angles with respect to the surface of the rotation shaft (101).

2. A speed measuring and direction finding device (100) that measures a rotation speed and finds a rotation direction of a rotation shaft according to claim 1, wherein
the inclination angle between one of the first inclined surface (104) or the second inclined surface (105) and the surface of the rotation shaft (101) is 70 degrees to 90 degrees.

3. A speed measuring and direction finding device (100) that measures a rotation speed and finds a rotation direction of a rotation shaft according to claim 2, wherein
the inclination angle between the other one of the first inclined surface (104) or the second inclined surface (105) and the surface of the rotation shaft (101) is 30 degrees to 60 degrees.

4. A speed measuring and direction finding device (100) that measures a rotation speed and finds a rotation direction of a rotation shaft according to any preceding claim, wherein
the eddy current signal processing module (200) includes a high-pass filtering module (201) configured to receive the eddy current signal from the eddy current displacement sensor (103) and output a filtered high frequency signal.

5. A speed measuring and direction finding device (100) that measures a rotation speed and finds a rotation direction of a rotation shaft according to any preceding claim, further comprising:
a signal slope calculation module (202) configured to set a predetermined proportional value of a signal peak value from the eddy current signal processing module (200) as a slope evaluation peak value, and calculate and output a signal slope according to the slope evaluation peak value; and
a rotation direction determination module (203) configured to compare the signal slope output by the signal slope calculation module (202) with a preset slope value of the first inclined surface (104) or the second inclined surface (105) to determine the rotation direction of the rotation shaft (101).

6. A speed measuring and direction finding device (100) that measures a rotation speed and finds a rotation direction of a rotation shaft according to claim 5, wherein
the predetermined proportional value is 70% to 90% of the signal peak value of the eddy current signal processing module (200).

7. A speed measuring and direction finding device (100) that measures a rotation speed and finds a rotation direction of a rotation shaft according to any preceding claim, further comprising:
a rotation speed determination module (204) configured to determine a rotation speed of the rotation shaft (101) according to a signal peak value from the eddy current signal processing module (200).

8. A compressor (300) comprising:
the speed measuring and direction finding device (100) that measures a rotation speed and finds a rotation direction of a rotation shaft according to any preceding claim; and
a compressor frequency modulation module (301) configured to issue a frequency modulation instruction for increasing or decreasing a rotation speed of the compressor (300), wherein
the speed measuring and direction finding device (100) operates only when the compressor frequency modulation module (301) issues the frequency modulation instruction for increasing the rotation speed of the compressor (300).

9. A refrigeration device (400) comprising:
a compressor (300), a condenser (401), and an evaporator (402) connected in sequence by a refrigerant pipeline (403), wherein
the compressor (300) is the compressor according to claim 8.
